# DEMANDE DE BREVET EUROPEEN

(11) **EP 4 603 723 A1**
(43) Date de publication de la demande: **20.08.2025**
(21) Numéro de dépôt: 25158365.4
(22) Date de dépôt: 17.02.2025
(51) Int. Cl.: F16H 37/04

(54) **MOTORÉDUCTEUR ÉLECTRIQUE**

(30) Priorité: 19.02.2024 FR 2401623
(71) Demandeur: Emeca, 64470 Tardets-Sorholus (FR)
(72) Inventeur: GARCIA, Laurent, 64470 Tardets-Sorholus (FR); DESCOUENS, Thomas, 64470 Tardets-Sorholus (FR)
(74) Mandataire: A.P.I. Conseil

(57) **Abrégé**

L'invention concerne un motoréducteur électrique 100 comprenant un moteur électrique sans balai 110 avec son arbre de sortie, un réducteur planétaire 120 couplé coaxialement à cet arbre, et un réducteur à mouvement unidirectionnel 130 avec ses moyens d'engrènement.

Le réducteur planétaire 120 intègre un élément d'entraînement central 121, des éléments de transmission satellites 122 supportés par un porte-satellites 123, et un élément de guidage fixe 124. Le réducteur à mouvement unidirectionnel 130 comprend des moyens d'engrènement configurés pour transmettre le mouvement dans un seul sens et un arbre de sortie couplé à ces moyens.

Le motoréducteur électrique 100 peut être intégré dans un système de contrôle d'ouvrants avec un ouvrant mobile, des moyens de détection de fin de course 170 et une unité de commande électronique, permettant ainsi le contrôle précis des mouvements d'ouverture et de fermeture.

Cette invention résout le problème de l'entraînement d'ouvrants nécessitant un couple important et une vitesse réduite, tout en garantissant le maintien en position grâce au réducteur à mouvement unidirectionnel 130, dans un encombrement optimisé.

## Description

### Domaine technique

L'invention concerne des systèmes et procédés pour l'entraînement d'ouvrants au moyen d'un motoréducteur électrique combinant un moteur sans balai, un réducteur planétaire et un réducteur à mouvement unidirectionnel.

### Technique antérieure

Les motoréducteurs électriques sont largement utilisés dans l'industrie pour entraîner des machines ou des équipements avec précision. Ces dispositifs doivent notamment permettre de contrôler des ouvrants dans des environnements industriels exigeants comme les exploitations horticoles, agricoles ou les bâtiments d'élevage.

Cependant, les motoréducteurs électriques conventionnels présentent souvent des limitations importantes. En effet, ils sont généralement soit trop encombrants pour s'intégrer facilement dans les installations existantes, soit insuffisamment puissants pour délivrer le couple nécessaire. De plus, ils ne garantissent pas toujours un maintien fiable de la position en l'absence d'alimentation.

Par ailleurs, les solutions actuelles nécessitent fréquemment des compromis entre la compacité du système et ses performances mécaniques, ce qui limite leur utilisation dans certaines applications industrielles critiques.

Il existe un besoin pour des motoréducteur électriques performants et compacts, capables de délivrer un couple élevé à vitesse réduite.

### Résumé de l'invention

L'invention vise à résoudre, au moins partiellement, ce besoin comme décrit dans les revendications ci-jointes.

Les revendications dépendantes décrivent des modes de réalisation spécifiques de la présente demande.

Ces aspects et d'autres de la présente demande seront apparents à partir d'une explication basée sur les modes de réalisation décrits ci-après.

### Brève description des dessins

Des détails, aspects et modes de réalisation supplémentaires de la présente demande feront l'objet d'une description, à titre d'exemple seulement, en référence aux dessins. Dans les dessins, des numéros de référence identiques sont utilisés pour identifier des éléments identiques ou fonctionnellement similaires. Les éléments dans les figures sont illustrés pour plus de simplicité et de clarté et n'ont pas nécessairement été dessinés à l'échelle.

En outre, certains dessins sont présentés en couleurs et/ou en transparence, car leur représentation en noir et blanc est impossible. En particulier, les couleurs sont nécessaires dans ces dessins pour discerner des détails qui seraient perdus s'ils étaient présentés en noir et blanc.
La figure 1 représente une vue en perspective du motoréducteur électrique selon l'invention.
La figure 2 représente une photo du motoréducteur électrique de la figure 1.
La figure 3 représente une vue en coupe longitudinale du motoréducteur électrique de la figure 1.
La figure 4 représente une vue en perspective d'un exemple de moteur électrique sans balai utilisable dans le motoréducteur électrique de la figure 1.
La figure 5 représente une photo d'un exemple du moteur électrique sans balai de la figure 4.
La figure 6 une vue en perspective d'un exemple de réducteur planétaire utilisable dans le motoréducteur électrique de la figure 1.
La figure 7 représente une photo d'un exemple de réducteur planétaire de la figure 8.
La figure 8 représente une première vue en perspective d'un exemple de réducteur irréversible utilisable dans le motoréducteur électrique de la figure 1.
La figure 9 représente une deuxième vue en perspective du réducteur irréversible de la figure 8.
La figure 10 représente une troisième vue en perspective du réducteur irréversible de la figure 8.
La figure 11 représente une quatrième vue en perspective du réducteur irréversible de la figure 8.
La figure 12 représente une vue en perspective d'un exemple de vis sans fin du réducteur irréversible de la figure 8.
La figure 13 représente une photo en perspective de la vis sans fin de la figure 12.
La figure 14 représente une vue en perspective d'un exemple de roue creuse dentée du réducteur irréversible de la figure 8.
La figure 15 représente une photo en perspective de la roue creuse dentée de la figure 14.
La figure 16 représente une vue en perspective d'un exemple d'arbre de sortie du réducteur irréversible de la figure 8.

### Description des modes de réalisation

### Remarques préliminaires

Afin de ne pas obscurcir la description et détourner le lecteur de la compréhension des enseignements de l'invention, nos explications n'iront pas au-delà de ce que nous considérons comme nécessaire pour la compréhension et l'appréciation des concepts sous-jacents de l'invention par une personne du domaine technique de l'invention. En effet, les modes de réalisation illustrés dans la description sont, pour la plupart, composés d'éléments connus de la personne du métier.

### Objectif de l'invention

L'un des objectifs principaux de l'invention est de fournir un motoréducteur électrique performant et compact, capable de délivrer un couple élevé à vitesse réduite, tout en assurant un blocage mécanique fiable de la position, et ce, dans un encombrement limité.

### Solution proposée

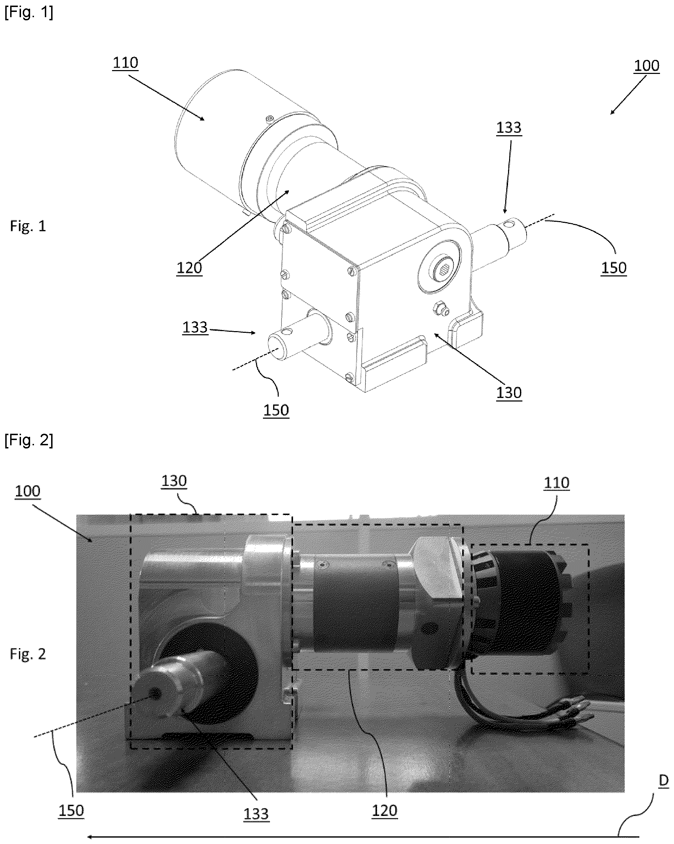

Pour atteindre cet objectif, comme illustré sur les figures 1 à 16, les inventeurs proposent une combinaison innovante associant un moteur électrique sans balai 110, un réducteur planétaire 120 et un réducteur irréversible 130.

Cette association permet d'obtenir un motoréducteur électrique 100 à la fois puissant et compact, avec un rendement optimal.

Le réducteur planétaire 120 apporte une première réduction de vitesse, tandis que le réducteur irréversible 130, par exemple, de type vis sans fin-roue creuse, assure un blocage en position et une seconde réduction.

Le motoréducteur électrique 100 selon l'invention répond ainsi au besoin d'entraînements électriques performants conjuguant couple important, vitesse réduite, irréversibilité et encombrement limité.

Il trouve des applications dans de nombreux domaines nécessitant la transmission précise d'efforts importants, comme le contrôle d'ouverture et fermetures d'ouvrants pour des installations telles que les serres horticoles, les bâtiments agricoles, les bâtiments d'élevage et les structures industrielles.

### Structure de la description

La description détaille l'invention en plusieurs aspects principaux.

Le premier aspect présente les composants essentiels du motoréducteur électrique 100 : le moteur électrique sans balai 110, le réducteur planétaire 120 et le réducteur irréversible 130. Pour chaque composant, la description définit précisément les termes techniques, expose leur structure et leur fonctionnement, et détaille leurs caractéristiques techniques spécifiques.

Le deuxième aspect décrit les applications du motoréducteur, notamment son intégration dans des systèmes de contrôle d'ouvrants. Cette partie détaille la structure du système de contrôle, ses composants et son fonctionnement.

Le troisième aspect expose le procédé de fonctionnement du motoréducteur, incluant l'entraînement mécanique et la commande électronique du système.

Enfin, le quatrième aspect présente les utilisations spécifiques du motoréducteur, particulièrement dans le domaine des installations agricoles, horticoles et d'élevage.

### Le motoréducteur électrique 100

Le terme « motoréducteur » désigne un dispositif qui combine un moteur électrique et un réducteur de vitesse, également connu sous le nom de boîte de vitesses. Cette combinaison est spécifiquement conçue pour entraîner une charge particulière à un couple élevé et à une vitesse réduite, dans un espace compact. Il est couramment utilisé dans diverses industries pour faire fonctionner des machines ou des équipements avec précision. Le motoréducteur peut délivrer un couple élevé à une vitesse faible, ce qui en fait une solution performante et économique en termes d'espace.

La figure 1 illustre une vue en perspective du motoréducteur électrique 100 selon l'invention.

Comme illustré sur la figure 1, le motoréducteur électrique 100 comprend un moteur électrique sans balai 110, un réducteur planétaire 120 et un réducteur irréversible 130.

Le terme « moteur électrique sans balai » désigne un type de moteur électrique qui utilise un champ magnétique généré par des aimants permanents pour convertir l'énergie électrique en énergie mécanique. Contrairement aux moteurs électriques à balais, les moteurs sans balai n'utilisent pas de contacts mécaniques pour commuter le courant, ce qui réduit l'usure mécanique et élimine le besoin d'entretien. En outre, les moteurs électriques sans balai sont généralement plus efficaces et fonctionnent plus silencieusement que leurs homologues à balais.

Dans l'invention, le réducteur planétaire 120 est disposé entre le moteur électrique sans balai 110 et le réducteur irréversible 130.

La figure 2 illustre une photo du motoréducteur électrique 100 selon l'invention qui s'étend longitudinalement selon la direction D.

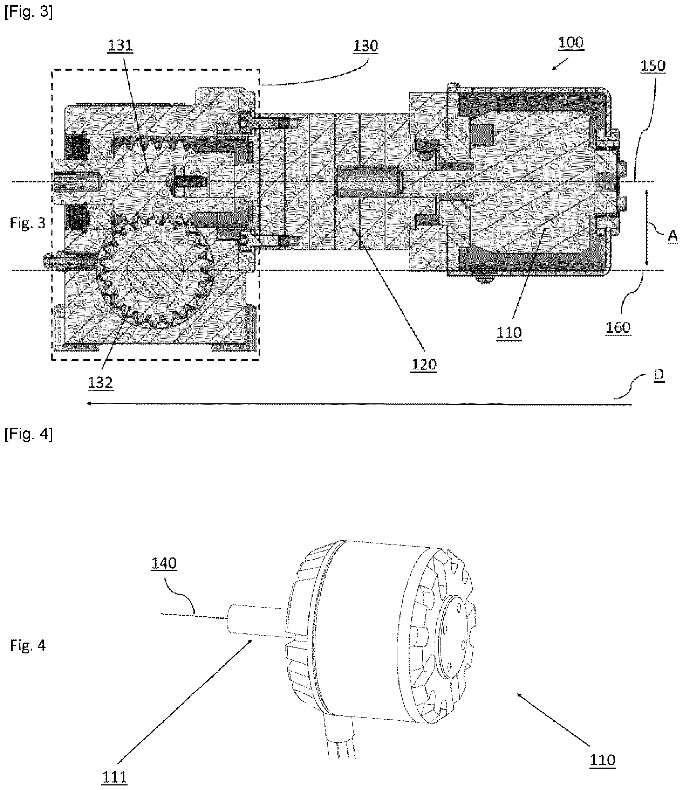

La figure 3 représente une vue en coupe longitudinale du motoréducteur électrique 100 selon l'invention.

Comme illustré sur la figure 3, le moteur électrique sans balai 110, le réducteur planétaire 120 et le réducteur irréversible 130 présentent un axe de rotation commun, dit « premier axe de rotation » 140, sur la figure 3.

Par ailleurs, une roue creuse dentée 132 du réducteur irréversible 130 présente un axe de rotation 150, dit « deuxième axe de rotation », qui est distinct du premier axe de rotation 140 et qui est sensiblement perpendiculaire au premier axe de rotation 140.

On entend par « roue creuse dentée », une roue cylindrique droite standard, comportant une ouverture traversante 1321 en son centre qui lui confère son caractère « creux », avec une denture hélicoïdale sur sa périphérie. Le terme « creuse » fait ainsi référence non seulement à cette ouverture centrale, mais aussi à une légère gorge ou rainure circulaire sur la face de la roue, pour augmenter la surface de contact avec les filets de la vis. Elle est obtenue par « soustraction » du profil de la vis génératrice - elle est taillée par une fraise mère qui est la réplique exacte de ce profil. La roue creuse dentée 132 est définie par les paramètres de sa vis génératrice, mais aussi par son nombre de dents 1322, son coefficient de déport, son creux secondaire de vis qui détermine son diamètre extérieur, et sa largeur.

Dans l'invention, le deuxième axe de rotation 150 est orienté selon une direction prédéterminée par rapport au premier axe de rotation 140, cette direction pouvant varier selon les configurations souhaitées. Par exemple, le deuxième axe de rotation 150 peut être orienté perpendiculairement au premier axe, ou former un angle aigu ou obtus avec celui-ci, typiquement entre 60° et 120°, selon les contraintes d'installation et l'application visée. Par ailleurs, le deuxième axe de rotation 150 est espacé du premier axe de rotation 140 d'une distance prédéterminée qui correspond à l'entraxe nécessaire pour assurer un engrènement optimal.

Dans l'exemple de réalisation illustré sur la figure 3, le premier axe de rotation 140 et un « troisième axe » 160, comme illustré sur la figure 3, qui est perpendiculaire au deuxième axe de rotation 150 (c.-à-d., l'axe de rotation de la roue creuse dentée 132), sont disposés de manière parallèle l'un à l'autre avec un espacement vertical, A, entre les deux axes qui correspond à un entraxe prédéterminé.

Dans une première mise en œuvre particulière, le premier axe de rotation 140 est positionné au-dessus du deuxième axe de rotation 150 et du troisième axe 160.

Dans une deuxième mise en oeuvre particulière, le premier axe de rotation 140 est positionné en dessous du deuxième axe de rotation 150 et du troisième axe 160.

### Le moteur électrique sans balai 110

La figure 4 représente une vue en perspective d'un exemple de moteur électrique sans balai 110 utilisable dans le motoréducteur électrique 100 selon l'invention.

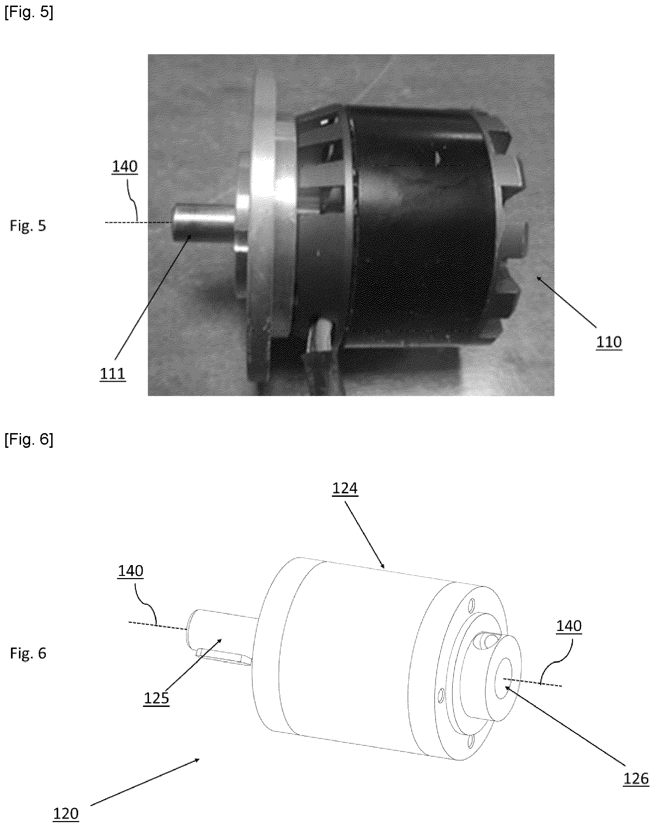

La figure 5 représente une photo d'un exemple de moteur électrique sans balai 110 utilisable dans le motoréducteur électrique 100 selon l'invention.

Par exemple, le moteur électrique sans balai 110 illustré sur la figure 5, alimenté par une tension de 24V, délivre une puissance minimale de 1500 Watts. Avec ses 14 pôles, il produit un couple important de 7 Nm et tourne à une vitesse de 4350 tr/min à vide, pour un courant absorbé de seulement 1,1A.

Toutefois, selon les besoins et les ressources disponibles, on pourra envisager d'utiliser un moteur électrique sans balai 110 qui est caractérisé par d'autres valeurs, et ce, sans nécessiter de modifications substantielles de l'invention.

Dans cet exemple du moteur électrique sans balai 110, pour le contrôler, on utilise une carte électronique triphasée qui accepte une large plage de tensions d'alimentation, de 6,5 à 50V. Cette carte électronique triphasée peut fournir jusqu'à 380W de puissance électrique au moteur électrique sans balai 110, avec un courant nominal de 16A (30A max). Elle intègre les protections nécessaires contre les surintensités et la surchauffe.

En outre, la carte électronique triphasée comprend des circuits de puissance spécifiquement dimensionnés pour délivrer le courant nominal prédéterminé. Un régulateur intégré permet de moduler précisément la vitesse de rotation et le couple du moteur électrique sans balai 110 selon les besoins de l'application. L'interface d'alimentation de la carte électronique triphasée a été conçue pour accepter une plage de tensions étendue, offrant ainsi une grande flexibilité d'utilisation dans différentes configurations d'installation.

Toutefois, selon les besoins et les ressources disponibles, on pourra envisager d'utiliser une carte électronique qui est caractérisée par d'autres valeurs, et ce, sans nécessiter de modifications substantielles de l'invention.

En outre, le moteur électrique sans balai 110 comprend un premier arbre de sortie 111 qui permet la transmission du mouvement en sortie du moteur électrique sans balai 110.

En pratique, le premier arbre de sortie 111 présente un diamètre prédéterminé, par exemple, 8 mm.

Toutefois, selon les besoins et les ressources disponibles, on pourra envisager d'utiliser d'autres diamètres du premier arbre de sortie 111, et ce, sans nécessiter de modifications substantielles de l'invention.

Par ailleurs, le premier arbre de sortie 111 est couplé coaxialement au réducteur planétaire 120.

### Le réducteur planétaire 120

Le terme « réducteur planétaire 120 » désigne un mécanisme de transmission de mouvement utilisé pour obtenir une réduction de vitesse importante dans un encombrement réduit. Il est composé d'un ensemble de roues dentées, dont une roue centrale appelée « soleil », des roues périphériques appelées « planètes » et un anneau externe appelé « couronne ». La rotation de l'ensemble des planètes autour du soleil, tout en étant contraintes par la couronne, permet d'obtenir une réduction de vitesse significative. Ce type de réducteur est particulièrement apprécié pour sa compacité, sa capacité à transmettre de grands couples et son rendement élevé.

Plus généralement, le réducteur planétaire 120 comprend un élément d'entraînement central 121 qui est solidaire du premier arbre de sortie 111. Des éléments de transmission satellites 122 sont mis en mouvement par l'élément d'entraînement central 121. Ces éléments de transmission satellites 122 sont supportés par un porte-satellites 123 et coopèrent avec un élément de guidage fixe 124. Un deuxième arbre de sortie 125 du réducteur planétaire 120 est solidaire du porte-satellites 123 pour transmettre le mouvement réduit. Cette configuration générale permet d'obtenir la réduction de vitesse souhaitée tout en conservant un excellent rendement mécanique.

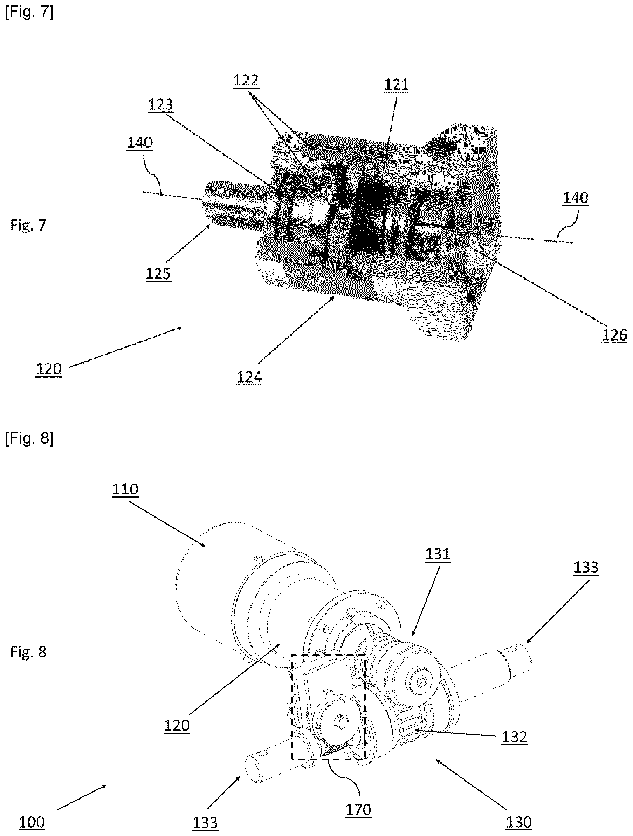

La figure 7 représente une vue en perspective d'un exemple de réducteur planétaire 120 utilisable dans le motoréducteur électrique 100 selon l'invention.

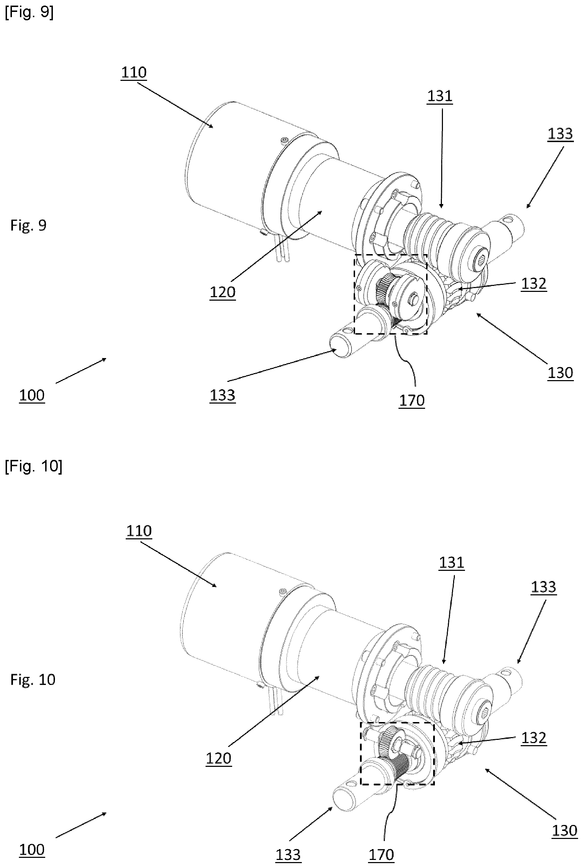

La figure 9 représente une photo d'un exemple de réducteur planétaire 120 utilisable dans le motoréducteur électrique 100 selon l'invention.

En pratique, le réducteur planétaire 120 illustré est couplé avec le premier arbre de sortie 111.

Par exemple, le réducteur planétaire 120 peut comprendre un moyeu 126 qui est conçu pour recevoir, de manière amovible, le premier arbre de sortie 111.

En outre, le réducteur planétaire 120 comprend un pignon planétaire 121 qui est solidaire du moyeu 126 et donc du premier arbre de sortie 111.

Par ailleurs, le réducteur planétaire 120 comprend plusieurs pignons satellites 122, qui sont portés par un porte-satellites 123, et qui sont conçus pour être entraînés en rotation par le pignon planétaire 121.

Les pignons satellites 122 sont en prise avec une bague externe fixe 124 du réducteur planétaire 120, qui sert de point fixe et impose aux satellites de tourner autour du pignon planétaire 121 lorsque celui-ci est entraîné en rotation par le moteur électrique sans balai 110. Ainsi, lorsque le pignon tourne, il impose sa rotation aux pignons satellites 122. Ces derniers tournent autour du pignon planétaire 121 dans la bague externe fixe 124.

Les pignons satellites 122 sont reliés de manière solidaire aux porte-satellites 123 via, par exemple, un embrochage. Ainsi, lorsque les pignons satellites 122 tournent autour du pignon planétaire 121, ils entraînent dans leur rotation le porte-satellites 123.

Le porte-satellites 123 est fixé de manière solidaire au deuxième arbre de sortie 125, de manière à lui imposer son mouvement de rotation. Ainsi, le deuxième arbre de sortie 125 tourne à la même vitesse que le porte-satellites 123.

On obtient ainsi une réduction de vitesse entre la rotation du pignon planétaire 121 entraîné par le moteur électrique sans balai 110, et la rotation du deuxième arbre de sortie 125, du fait des rapports de denture entre le pignon planétaire 121 et les pignons satellites 122. Le porte-satellite joue donc un rôle central dans la transmission du mouvement des satellites vers le deuxième arbre de sortie 125 réduit.

L'exemple de réducteur planétaire 120 illustré sur la figure 9 représente un réducteur planétaire 120 à un étage. Selon les caractéristiques de réduction recherchées en sortie du réducteur planétaire 120, on peut, par exemple, utiliser des réducteurs planétaires comportant de 1 à 3 étages. Cela permet d'obtenir des rapports de réduction élevés, jusqu'à 1 tour de sortie pour 120 tours d'entrée avec un réducteur 3 étages. Les couples de sortie correspondants vont typiquement de 30 Nm pour un réducteur 1 étage à 40 Nm pour un réducteur 3 étages. Ces valeurs élevées de couple permettent de transmettre des efforts importants à la charge entraînée en sortie.

Toutefois, selon les besoins et les ressources disponibles, on pourra envisager d'utiliser des réducteurs planétaires comportant plus de 3 étages, avec des caractéristiques de réduction et de couple différents et ce, sans nécessiter de modifications substantielles de l'invention.

Par ailleurs, le deuxième arbre de sortie 125 est couplé coaxialement au réducteur irréversible 130.

### Le réducteur irréversible 130

Le terme « réducteur irréversible » désigne un type de mécanisme de réduction de vitesse qui empêche le mouvement en sens inverse. Cela signifie que la rotation peut se faire dans un sens (par exemple, du moteur à la charge), mais pas dans l'autre sens (de la charge au moteur). Cette caractéristique est particulièrement utile pour bloquer la position de la charge lorsque le moteur n'est pas alimenté, assurant ainsi la sécurité et la fiabilité de l'application.

Dans la présente invention, le réducteur irréversible 130 peut également être désigné comme un réducteur à mouvement unidirectionnel 130, car il ne permet la transmission du mouvement que dans un seul sens.

La figure 10 représente une première vue en perspective d'un exemple de réducteur irréversible 130 utilisable dans le motoréducteur électrique 100 selon l'invention.

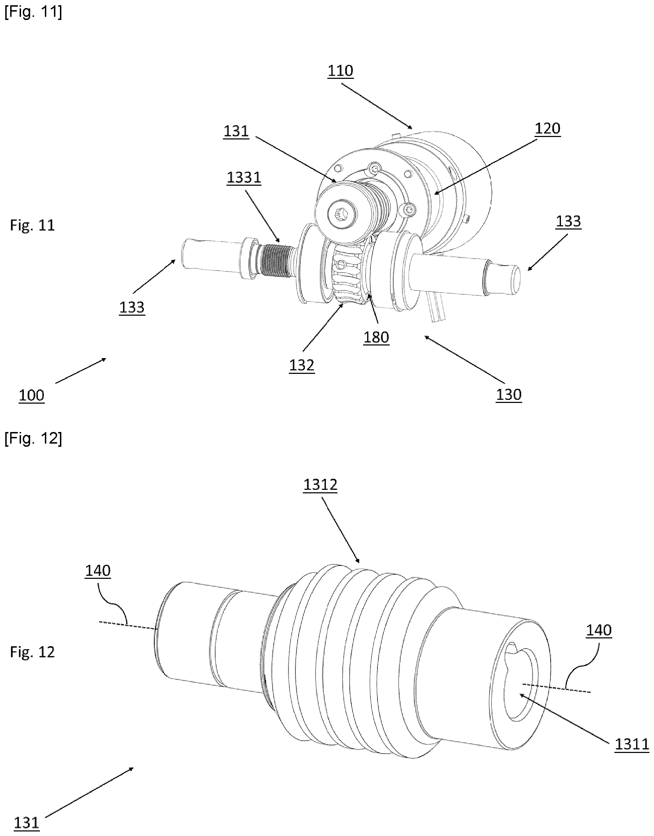

La figure 11 représente une deuxième vue en perspective d'un exemple de réducteur irréversible 130 utilisable dans le motoréducteur électrique 100 selon l'invention.

La figure 12 représente une troisième vue en perspective d'un exemple de réducteur irréversible 130 utilisable dans le motoréducteur électrique 100 selon l'invention.

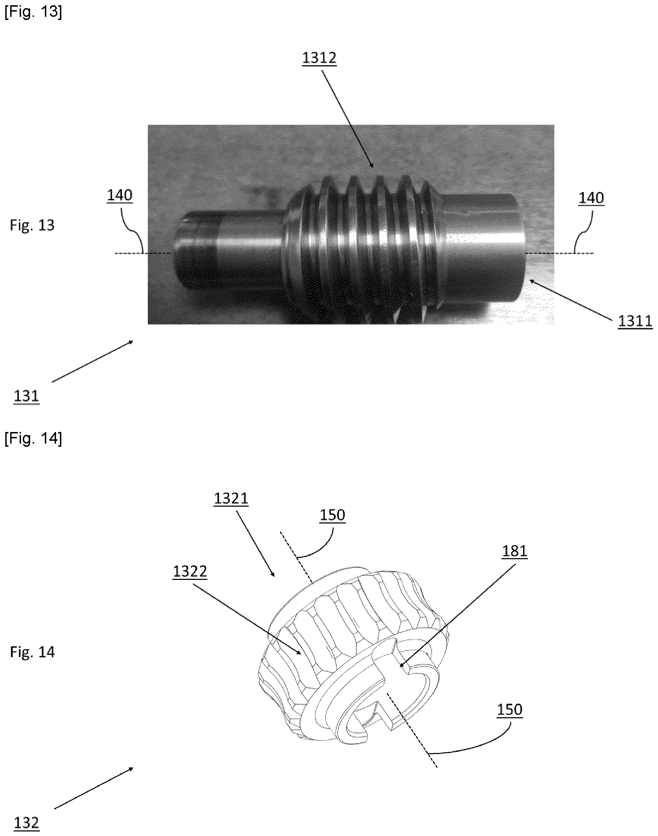

La figure 13 représente une quatrième vue en perspective d'un exemple de réducteur irréversible 130 utilisable dans le motoréducteur électrique 100 selon l'invention.

Dans un exemple de l'invention, le réducteur irréversible 130 est du type vis sans fin-roue creuse.

C'est-à-dire que la réduction de vitesse est réalisée entre une vis sans fin 131 et la roue creuse dentée 132. Cette réduction est dite « irréversible », car le mouvement ne peut se transmettre que dans un sens, de la vis sans fin 131 vers la roue creuse dentée 132.

La vis sans fin 131 et la roue creuse dentée 132 constituent les moyens d'engrènement du réducteur irréversible 130, configurés pour transmettre le mouvement de rotation dans un seul sens.

On entend par vis sans fin 131 un composant avec un profil hélicoïdal, caractérisé principalement par son nombre de filets, son pas axial, son diamètre primitif, l'inclinaison de son filet, ainsi que ses coefficients de saillie et de creux. La géométrie précise de son profil dépend du procédé de fabrication utilisé, donnant lieu à 4 types de profils différents : ZA, ZN, ZK et ZI. L'angle d'hélice a une grande influence sur les écarts entre ces différents profils.

On entend par roue creuse dentée 132 une roue cylindrique droite standard, avec une denture hélicoïdale sur sa périphérie. Le terme « creuse » fait référence à une légère gorge ou rainure circulaire sur la face de la roue, pour augmenter la surface de contact avec les filets de la vis. Elle est obtenue par « soustraction » du profil de la vis génératrice - elle est taillée par une fraise mère qui est la réplique exacte de ce profil. La roue creuse dentée 132 est définie par les paramètres de sa vis génératrice, mais aussi par son nombre de dents, son coefficient de déport, son creux secondaire de vis qui détermine son diamètre extérieur, et sa largeur. Pour modéliser la géométrie de la roue creuse dentée 132, on calcule les profils de sections de la vis génératrice à différentes altitudes, puis on utilise ces sections pour générer par enveloppement le profil en creux de la roue.

Dans un système à vis sans fin-roue creuse, la roue creuse dentée 132 tourne autour de son axe central et ses dents hélicoïdales 1322 s'engrènent avec les filets 1312 de la vis sans fin 131 lorsque leurs axes sont perpendiculaires.

Ainsi, lorsque le motoréducteur électrique 100 est à l'arrêt, la vis sans fin 131 ne peut pas tourner et entraîner la roue creuse dentée 132. En revanche, si on essayait de faire tourner la roue creuse dentée 132, le frottement serait trop important au niveau du filetage 1312 de la vis sans fin 131 et elle ne pourrait pas non plus tourner.

Par conséquent, quand le moteur ne tourne pas, il est impossible de mettre en rotation la vis sans fin 131 ou la roue creuse dentée 132 manuellement dans un sens ou dans l'autre. Le motoréducteur électrique 100 est donc bloqué mécaniquement dans les deux sens tant que le moteur électrique sans balai 110 ne tourne pas.

En pratique, la vis sans fin 131 est couplée solidaire au deuxième arbre de sortie 125.

Par exemple, la vis sans fin 131 peut comprendre un moyeu 1311 qui est conçu pour recevoir, de manière amovible, le deuxième arbre de sortie 125.

La figure 14 représente une vue en perspective d'un exemple de vis sans fin 131 du réducteur irréversible 130.

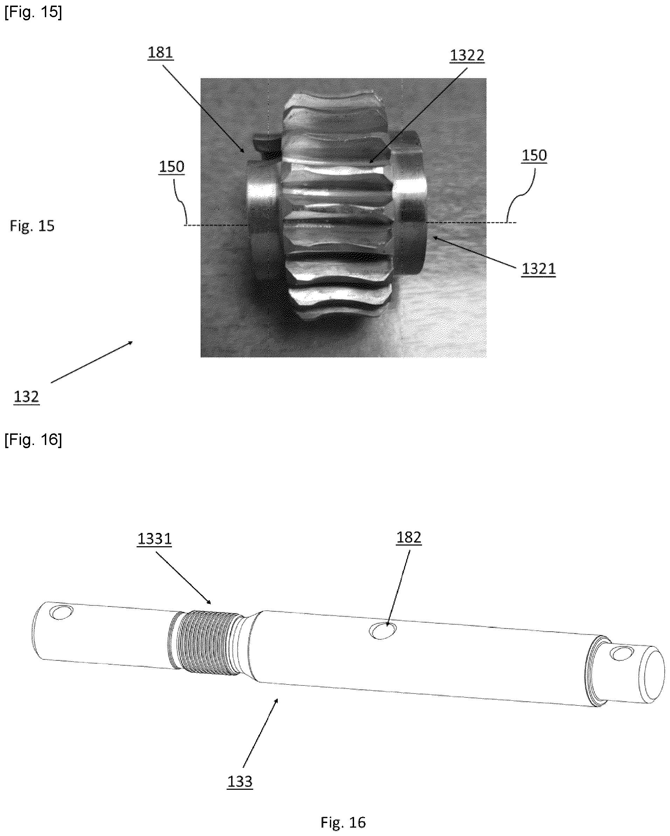

La figure 15 représente une photo en perspective d'un exemple de vis sans fin 131 du réducteur irréversible 130.

En outre, le réducteur irréversible 130 comprend une roue creuse dentée 132, qui est engrainée par la vis sans fin 131.

La figure 16 représente une vue en perspective d'un exemple de roue creuse dentée 132 du réducteur irréversible 130.

La figure 17 représente une photo d'un exemple de roue creuse dentée 132 du réducteur irréversible 130.

Par ailleurs, la sortie des moyens d'engrènement, constituée par la roue creuse dentée 132 est couplée à un l'arbre de sortie du réducteur irréversible 130 par clavette 180. Plus précisément, cette liaison est réalisée via une rainure de clavette 181 formée sur la roue creuse 132, en combinaison avec une clavette 180 conçue pour se glisser dans la rainure de clavette 181 et un trou de clavette 182 formée dans un troisième arbre de sortie 133 du réducteur irréversible 130.

Dans une mise en œuvre particulière, l'arbre de sortie du réducteur irréversible 130 comprend une vis sans fin 131 qui fait partie d'un mécanisme de détection de la fin de course 170 de la vis sans fin 131 et roue creuse dentée 132, comme illustré sur la figure 17.

Plus précisément, le mécanisme de détection de fin de course comprend un filetage 1331 formé sur le troisième arbre de sortie 133 et une roue dentée qui est conçue pour s'engrener avec ce filetage. Lors de la rotation du troisième arbre de sortie 133, la roue dentée se déplace axialement le long du filetage 1331 jusqu'à atteindre des positions prédéterminées correspondant aux fins de course. Des capteurs, par exemple de type contact ou inductif, sont positionnés pour détecter ces positions extrêmes et générer un signal correspondant. Ce mécanisme de détection de fin de course permet ainsi une détection précise et fiable des positions limites de l'ouvrant.

La figure 18 représente une vue en perspective d'un exemple d'arbre de sortie du réducteur irréversible 130 qui s'étend de part et d'autre de la roue creuse dentée 132. Toutefois, on peut envisager que l'arbre de sortie du réducteur irréversible 130 s'étende d'un seul côté de la roue creuse dentée 132.

Le réducteur à vis sans fin 131 qui assure la liaison entre la roue creuse dentée 132 et la vis sans fin 131 peut avoir différentes configurations en fonction des caractéristiques de réduction souhaitées. Par exemple, une possibilité est d'avoir un rapport de réduction de 1/22, ce qui signifie que pour 22 tours de la vis sans fin 131, la roue creuse dentée 132 ne fait qu'un seul tour. Dans cette configuration, la vis sans fin 131 a généralement un module de 2. L'angle de pression entre les dents de la roue creuse dentée 132 et le filet de la vis est aussi un paramètre important, avec par exemple un angle de 20 degrés.

Une autre configuration possible est d'avoir un rapport de réduction de 1/33, permettant d'obtenir une réduction plus importante. Ici, pour 33 tours de la vis sans fin 131, la roue creuse dentée 132 ne fait également qu'un tour. La vis sans fin 131 a alors typiquement un module de 2,5. Tout en conservant le même angle de pression de 20 degrés entre la roue et la vis.

Ainsi, le choix de la configuration du réducteur à vis sans fin 131 dépend des caractéristiques de réduction de vitesse recherchées entre la vis et la roue creuse dentée 132. Différents rapports, modules et angles de pression sont possibles.

Dans d'autres modes de réalisation, le réducteur à mouvement unidirectionnel 130 peut être réalisé selon d'autres configurations techniques permettant d'obtenir un mouvement unidirectionnel. Par exemple, il peut s'agir d'un réducteur à roue et vis tangente, d'un réducteur à engrenages coniques hélicoïdaux avec un angle d'hélice approprié, ou encore d'un réducteur à came et galet avec un profil spécifique. Ces alternatives au système vis sans fin-roue creuse permettent également d'obtenir l'irréversibilité recherchée tout en assurant une réduction de vitesse, bien que le système vis sans fin-roue creuse reste particulièrement avantageux en termes de compacité et d'efficacité.

### Applications et systèmes de contrôle

Le motoréducteur électrique 100 selon l'invention peut être intégré dans un système de contrôle d'ouvrants. Ce système comprend un ouvrant mobile pouvant se déplacer entre une position ouverte et une position fermée. Un mécanisme de liaison assure la connexion entre l'arbre de sortie du réducteur irréversible 130 et l'ouvrant. Des moyens de détection de fin de course 170 sont installés pour détecter avec précision les positions ouverte et fermée de l'ouvrant. Une unité de commande électronique gère le fonctionnement du moteur électrique sans balai 110 en fonction des différents paramètres du système.

Pour assurer une installation stable et sécurisée, le système intègre une structure de support qui est fixée directement au bâtiment. Cette structure constitue la base fondamentale pour l'installation et le montage approprié de l'ouvrant.

Dans une configuration particulière du système de contrôle, l'ouvrant mobile est fixé de manière ajustable par rapport à la structure de support. Cette fixation ajustable permet d'optimiser le positionnement de l'ouvrant en fonction des contraintes d'installation spécifiques. Les moyens de détection de fin de course 170 sont disposés de manière à détecter avec précision les positions ouverte et fermée de l'ouvrant, assurant ainsi un contrôle optimal des mouvements.

Le système intègre une unité de commande électronique sophistiquée qui assure la gestion complète du motoréducteur. Cette unité de commande est spécifiquement configurée pour piloter le moteur électrique sans balai 110 en tenant compte des signaux transmis par les moyens de détection de fin de course 170. Cette interaction entre l'unité de commande et les moyens de détection permet d'assurer un fonctionnement précis et sécurisé de l'ensemble du système.

Le système de contrôle peut également prendre en compte différents paramètres environnementaux pour optimiser le fonctionnement de l'ouvrant. Ces paramètres environnementaux comprennent notamment la température, l'humidité, la luminosité et la qualité de l'air. L'unité de commande électronique ajuste ainsi automatiquement la position de l'ouvrant en fonction des conditions environnementales mesurées, permettant une gestion optimale de l'atmosphère intérieure des bâtiments, particulièrement dans les contextes agricoles et horticoles où ces paramètres sont critiques.

### Procédé de fonctionnement

Le fonctionnement du motoréducteur électrique 100 selon l'invention suit un procédé d'entraînement spécifique. Ce procédé débute par l'alimentation du moteur électrique sans balai 110 sous une tension prédéterminée. Le mouvement est ensuite transmis au réducteur planétaire 120 qui assure une première réduction de vitesse. La chaîne cinématique se poursuit avec la transmission du mouvement au réducteur irréversible 130 qui réalise une seconde réduction tout en assurant le blocage mécanique de la position.

Le procédé de commande intègre plusieurs aspects essentiels au fonctionnement optimal du système. L'unité de commande reçoit et traite les signaux de commande, puis surveille en permanence la position de l'arbre de sortie. Le système est capable d'arrêter le moteur précisément à une position prédéterminée. La commande s'ajuste continuellement grâce aux informations transmises par les capteurs. La vitesse est modulée avec précision via la carte électronique triphasée, tandis que les positions limites sont contrôlées par la détection des fins de course.

### Utilisations

Le motoréducteur électrique 100 selon l'invention trouve une application particulièrement pertinente dans l'entraînement d'ouvrants au sein des installations telles que les serres horticoles, les bâtiments agricoles, les bâtiments d'élevage et les structures industrielles.

Dans ces environnements, sa capacité à délivrer un couple important tout en maintenant une position stable de manière fiable répond parfaitement aux exigences spécifiques de ces installations.

Toutefois, selon les besoins et les ressources disponibles, on pourra envisager d'utiliser l'invention dans d'autres environnements, et ce, sans nécessiter de modifications substantielles de l'invention.

Le motoréducteur électrique 100 selon l'invention est particulièrement adapté pour l'entraînement de différents types d'ouvrants. Il peut ainsi être utilisé pour actionner des fenêtres de toiture permettant la ventilation naturelle des bâtiments. Le motoréducteur peut également être employé pour la commande de trappes d'aération assurant une régulation optimale de l'atmosphère intérieure. Son utilisation s'étend aussi à l'automatisation des portes, notamment dans les zones nécessitant un contrôle d'accès précis. Le motoréducteur trouve également une application pertinente dans la commande des volets roulants, où sa capacité de maintien en position est particulièrement avantageuse.

### Conclusion

Nous avons décrit et illustré l'invention. Toutefois, l'invention ne se limite pas aux formes de réalisations que nous avons présentées. En effet, de nombreuses combinaisons des variantes, alternatives, modes de réalisation et mises en oeuvre, peuvent être envisagées sans nécessiter de modifications substantielles de l'invention. Ainsi, un expert du domaine peut déduire d'autres variantes, alternatives, modes de réalisation et mises en oeuvre, à la lecture de la description et des figures annexées et en fonction des contraintes économiques, ergonomiques, dimensionnelles à respecter.

Par ailleurs, lorsqu'une expression utilise le terme « au moins un », cela signifie que l'élément ou la caractéristique en question peut être présent en une seule occurrence ou en plusieurs occurrences, comprenant donc un, deux, trois ou plus d'éléments ou de caractéristiques, sans limite supérieure spécifiée.

D'autre part, l'expression « spécifiquement conçu pour » signifie que l'élément en question a été développé, qui est configuré et optimisé exclusivement dans le but de remplir la fonction particulière énoncée, et ne désigne pas un simple dispositif qui serait simplement « apte à » ou « adapté pour » remplir cette fonction. Cette expression indique une relation technique particulière et nécessaire entre la structure de l'élément et sa fonction, dépassant la simple aptitude à réaliser cette fonction.

En ce qui concerne l'expression « tout ou partie », elle indique une flexibilité dans la sélection ou l'utilisation des éléments ou des données mentionnés. Cette expression signifie que l'action ou la caractéristique décrite peut s'appliquer à l'ensemble complet des éléments ou des données en question, ou seulement à une portion sélectionnée de ceux-ci. L'utilisation de « tout ou partie » permet ainsi d'englober un large éventail de possibilités, allant de l'utilisation intégrale à une utilisation partielle, sans spécifier de limite inférieure ou supérieure précise quant à la quantité ou à la proportion concernée.

Il convient de noter que les exemples fournis tout au long de cette description sont présentés à titre illustratif et non limitatif. Ces exemples visent à faciliter la compréhension de l'invention par l'homme du métier, en fournissant des illustrations concrètes de mise en œuvre possible.

Cependant, l'invention ne se limite pas à ces exemples spécifiques. L'homme du métier comprendra que ces exemples peuvent être généralisés, adaptés ou modifiés en fonction des besoins spécifiques, des avancées technologiques ou des contraintes particulières, sans pour autant s'écarter de l'esprit de l'invention. Ainsi, chaque fois qu'un exemple est donné, il doit être interprété comme englobant non seulement l'exemple spécifique mentionné, mais aussi toutes les variantes et alternatives techniques équivalentes qui remplissent la même fonction ou atteignent le même objectif dans le contexte de l'invention.

L'invention peut faire l'objet de nombreuses variantes et applications autres que celles décrites ci-dessus. En particulier, sauf indication contraire, les différentes caractéristiques structurelles et fonctionnelles de chaque mise en œuvre particulière décrite ci-dessus ne doivent pas être considérées comme combinées et/ou étroitement et/ou inextricablement liées les unes aux autres, mais, au contraire, comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente.

## Revendications

1. Motoréducteur électrique 100 comprenant,
- un moteur électrique sans balai 110 comportant un premier arbre de sortie 111,
- un réducteur planétaire 120 couplé coaxialement au premier arbre de sortie du 111, et comportant,
-- un élément d'entraînement central 121 solidaire du premier arbre de sortie 111,
-- des éléments de transmission satellites 122,
-- un porte-satellites 123 supportant les éléments de transmission satellites 122,
-- un élément de guidage fixe 124 coopérant avec les éléments de transmission satellites 122,
-- un deuxième arbre de sortie 125 solidaire du porte-satellites 123
- un réducteur à mouvement unidirectionnel 130, comprenant
-- des moyens d'engrènement configurés pour transmettre le mouvement de rotation dans un seul sens, et
-- un troisième arbre de sortie 133 couplé aux moyens d'engrènement, dans lequel,
- le réducteur planétaire 120 est disposé entre le moteur électrique sans balai 110 et le réducteur à mouvement unidirectionnel 130,
- le moteur électrique sans balai 110, le réducteur planétaire 120 et le réducteur à mouvement unidirectionnel 130 présentent un premier axe de rotation 140 commun, et
- la sortie des moyens d'engrènement est montée rotative autour d'un deuxième axe de rotation 150, le deuxième axe de rotation 150 étant, relativement au premier axe de rotation 140,
-- distinct,
-- orienté selon une direction prédéterminée, et
-- espacé d'une distance prédéterminée.

2. Motoréducteur électrique 100 selon la revendication 1, dans lequel le réducteur planétaire 120 comprend un ou plusieurs étages planétaires pour adapter le rapport de réduction.

3. Motoréducteur électrique 100 selon l'une quelconque des revendications 1 à 2, dans lequel le réducteur à mouvement unidirectionnel 130 présente un rapport de réduction compris entre 1/22 et 1/33.

4. Motoréducteur électrique 100 selon l'une quelconque des revendications 1 à 3, dans lequel le réducteur planétaire 120 est configuré pour délivrer un couple de sortie compris entre 30 Nm et 40 Nm en fonction du nombre d'étages planétaires.

5. Motoréducteur électrique 100 selon l'une quelconque des revendications 1 à 4, dans lequel le moteur électrique sans balai 110 est alimenté par une tension de 24V et délivre une puissance minimale de 1500 Watts.

6. Motoréducteur électrique 100 selon l'une quelconque des revendications 1 à 5, dans lequel l'arbre de sortie du réducteur à mouvement unidirectionnel 130 s'étend d'au moins un côté de la sortie des moyens d'engrènement afin de permettre la fixation de dispositifs de commande ou de détection sur le au moins un côté.

7. Motoréducteur électrique 100 selon l'une des revendications 1 à 6, dans lequel la sortie des moyens d'engrènement est couplée à l'arbre de sortie du réducteur à mouvement unidirectionnel 130 par l'intermédiaire d'une liaison par clavette 180.

8. Système de contrôle d'ouvrants, comprenant :
- un motoréducteur électrique 100 selon l'une quelconque des revendications 1 à 7,
- un ouvrant mobile entre une position ouverte et une position fermée,
- un mécanisme de liaison entre l'arbre de sortie du réducteur à mouvement unidirectionnel 130 et l'ouvrant,
- des moyens de détection de fin de course 170 configurés pour détecter les positions ouverte et fermée de l'ouvrant, et
- une unité de commande électronique configurée pour commander le moteur électrique sans balai 110 en fonction des signaux des moyens de détection.

9. Système de contrôle d'ouvrants selon la revendication 8, comprenant en outre une structure de support fixée à un bâtiment, où la structure sert de base pour l'installation et le montage de l'ouvrant.

10. Procédé d'entraînement d'un ouvrant, mettant en œuvre un motoréducteur électrique 100 selon l'une quelconque des revendications 1 à 7, le procédé comprenant au moins :
- une étape d'alimentation du moteur électrique sans balai 110 sous une tension prédéterminée,
- une étape d'entraînement en rotation du réducteur planétaire 120 par le moteur électrique sans balai 110 pour obtenir une première réduction de vitesse,
- une étape de transmission du mouvement de sortie du réducteur planétaire 120 au réducteur à mouvement unidirectionnel 130 pour obtenir une seconde réduction de vitesse et bloquer mécaniquement l'ouvrant en l'absence d'alimentation.

11. Procédé de commande d'un ouvrant selon la revendication 10, comprenant en outre :
- une étape de réception d'un signal de commande pour actionner le motoréducteur électrique 100,
- une étape de détection de la position de l'arbre de sortie du réducteur à mouvement unidirectionnel 130,
- une étape d'arrêter du moteur électrique sans balai 110 lorsqu'une position prédéterminée est atteinte.

12. Procédé selon la revendication 11, comprenant en outre :
- une étape d'ajustement de la commande du moteur électrique sans balai 110 en fonction d'un retour d'information provenant d'un capteur de position intégré au système de détection de fin de course 170.

13. Procédé selon l'une quelconque des revendications 11 à 12, dans lequel on module la vitesse de rotation du moteur électrique sans balai 110 au moyen d'une carte électronique triphasée.

14. Procédé selon l'une quelconque des revendications 11 à 13, dans lequel on détecte une fin de course 170 de l'ouvrant au moyen d'un dispositif de détection associé à l'arbre de sortie du réducteur à mouvement unidirectionnel 130.

15. Utilisation du motoréducteur électrique 100 selon l'une quelconque des revendications 1 à 7 pour l'entraînement d'ouvrants dans, au moins, une installation choisie parmi, des serres horticoles, des bâtiments agricoles, des bâtiments d'élevage et des structures industrielles.
